# FASCICULE DE BREVET EUROPEEN

(11) **EP 0 694 793 B1**
(45) Date de publication et mention de la délivrance du brevet: **24.10.2001**
(21) Numéro de dépôt: 95401431.2
(22) Date de dépôt: 19.06.1995
(51) Int. Cl.: G01S 17/74, G01S 17/88, B64F 1/20, G01S 17/89

(54) **Procédé et dispositif pour l'identification d'un élément particulier dans l'obscurité**
Verfahren und Vorrichtung zum Erkennen eines besonderen Elementes in der Dunkelheit
Method and device for the identification of a particular element in darkness

(30) Priorité: 25.07.1994 FR 9409153
(43) Date de publication de la demande: 31.01.1996
(73) Titulaire: COMPAGNIE INDUSTRIELLE DES LASERS CILAS, F-91460 Marcoussis (FR)
(72) Inventeur: Cornillault, Jean, F-91620 Nozay (FR); Solmon, Jean, F-91000 Evry (FR); Auric, Daniel, F-92330 Sceaux (FR)
(74) Mandataire: Bonnetat, Christian

(56) Documents cités:
- EP-A- 0 381 449
- DE-A- 3 629 911
- US-A- 4 862 164
- US-A- 5 200 851

## Description

La présente invention concerne un procédé et un dispositif pour permettre à un observateur pourvu d'un dispositif de vision de nuit, d'identifier un élément particulier dans l'obscurité. Cette invention peut être mise en oeuvre dans de nombreuses applications, comme par exemple la reconnaissance des éléments d'un même groupe, la localisation et/ou la reconnaissance d'un aéronef, d'un satellite, d'un navire, d'un véhicule, etc ... ou bien encore la reconnaissance nocturne, par un observateur monté à bord d'un aéronef, d'une piste d'atterrissage, d'une zone de parachutage, etc ...

On sait que, dans cette dernière application, pour les atterrissages et/ou les parachutages de nuit, il est nécessaire de baliser les pistes et les zones concernées au moyen de sources lumineuses. Un tel balisage nécessite donc l'installation préalable, complexe et longue, desdites sources lumineuses, qui peuvent être des lampes électriques, des feux, des braseros, etc ... Lorsque lesdites pistes ou zones sont improvisées et/ou provisoires, il est évident que le balisage est rendu encore plus difficile par manque de moyens et de temps. De plus, il est nécessaire de disposer de générateurs électriques, lorsque lesdites sources lumineuses sont des lampes. Enfin, ces sources lumineuses manquent de discrétion et peuvent facilement être repérées par un ennemi.

Par ailleurs, par le document DE-A-36 29 911, on connaît déjà un procédé, ainsi que son dispositif de mise en oeuvre, permettant à un observateur, monté à bord d'un aéronef, d'identifier, dans l'obscurité, une zone particulière du sol. Selon ce procédé connu :
- on marque ladite zone particulière en disposant sur ledit sol au moins un dispositif réflecteur, susceptible de réfléchir, dans la direction d'incidence, un faisceau de lumière monochromatique infrarouge incident, ledit dispositif réflecteur étant dirigé dans la direction d'arrivée dudit aéronef ; et
- on dispose à bord dudit aéronef un projecteur susceptible d'émettre ledit faisceau de lumière monochromatique infrarouge.

Dans ce document antérieur, on utilise une caméra de télévision et un écran d'affichage d'images, ainsi qu'un projecteur à champ étroit, monté rotatif de façon à pouvoir balayer le sol. De plus, on prévoit une puissance importante pour le projecteur de façon que l'observateur puisse voir, en plus des réflecteurs, les particularités du paysage.

Dans ces conditions, le dispositif de ce document antérieur est obligatoirement complexe et coûteux, puisqu'il est nécessaire d'utiliser des illuminateurs laser de grande énergie.

La présente invention a pour objet de remédier à ces inconvénients. Elle permet, entre autres applications, de réaliser rapidement le balisage d'une piste d'atterrissage ou d'une zone de parachutage, sans infrastructure et sans source d'énergie, tout en assurant une très grande discrétion audit balisage et en ne nécessitant qu'un illuminateur de faible énergie.

A cette fin, selon l'invention, le procédé permettant à un observateur embarqué à bord d'un aéronef d'identifier un élément particulier dans l'obscurité, procédé selon lequel :
- on marque ledit élément particulier à l'aide de plusieurs dispositifs réflecteurs, susceptibles de réfléchir, dans la direction d'incidence, un faisceau de lumière monochromatique infrarouge incident, lesdits dispositifs réflecteurs étant dirigés dans la direction dudit observateur ; et
- on dispose, sur ledit aéronef, un projecteur susceptible d'émettre ledit faisceau de lumière monochromatique infrarouge,
est remarquable
- en ce que ledit observateur est équipé d'un dispositif de vision de nuit et observe ledit élément particulier de terrain à travers ledit dispositif de vision de nuit ;
- en ce que ledit projecteur (P) est monté fixe sur ledit aéronef (A) ; et
- en ce que ledit projecteur (P) produit un niveau d'éclairement tel que :
   . lesdits dispositifs réflecteurs (RF) sont visibles à travers ledit dispositif de vision de nuit pointé sur le champ d'éclairement dudit projecteur (P) ; et
   . les objets situés dans ledit champ d'éclairement, autres que lesdits dispositifs réflecteurs (RF), ne sont pas visibles à travers ledit dispositif de vision de nuit.

On obtient donc un dispositif simple, à projecteur fixe, ne nécessitant pas d'utiliser des illuminateurs laser de grande énergie, complexes et coûteux.

Dans la mise en oeuvre de la présente invention, le projecteur fixe éclaire un champ étendu avec une intensité faible. Le niveau d'éclairement qu'il produit sur les objets situés dans le champ d'éclairement autres que ledit ou lesdits dispositifs réflecteurs, n'est pas suffisant pour que ces objets soient visibles à travers ledit dispositif de vision de nuit pointé sur le champ éclairé. En revanche, le ou les dispositifs réflecteurs renvoient dans la direction de l'observateur une énergie suffisante pour être visibles dans ledit dispositif de vision de nuit. L'observateur monté à bord de l'aéronef et observant le terrain survolé avec ledit dispositif de vision de nuit, voit donc dans celui-ci une pluralité de points lumineux correspondant chacun à l'un desdits dispositifs réflecteurs éclairés par ledit projecteur. Pour cet observateur, la perception de la scène éclairée par le projecteur est donc limitée aux dispositifs réflecteurs qui présentent un pouvoir rétroréfléchissant supérieur à l'albédo moyen de la scène se trouvant dans ledit champ.

Par suite, si les dispositifs réflecteurs marquent ou délimitent une piste ou une zone, l'observateur voit cette piste ou cette zone à travers ledit dispositif de vision de nuit.

La présente invention concerne également un dispositif permettant à un observateur embarqué à bord d'un aéronef d'identifier un élément particulier dans l'obscurité, ledit dispositif comportant :
- plusieurs dispositifs réflecteurs susceptibles de réfléchir, dans la direction d'incidence, un faisceau de lumière monochromatique infrarouge incident, lesdits dispositif réflecteurs étant destinés à marquer ledit élément et à être dirigés dans la direction dudit observateur ; et
- un projecteur, disposé sur ledit aéronef, et susceptible d'émettre ledit faisceau de lumière monochromatique infrarouge.

Selon la présente invention, ledit dispositif est remarquable en ce qu'il comporte de plus un dispositif de vision de nuit à travers lequel ledit observateur observe ledit élément particulier de terrain, en ce que ledit projecteur (P) est fixe, et en ce que ledit projecteur (P) produit un niveau d'éclairement tel que :
. lesdits dispositifs réflecteurs (RF) sont visibles à travers ledit dispositif de vision de nuit pointé sur le champ d'éclairement dudit projecteur (P) ; et
. les objets situés dans le champ d'éclairement, autres que lesdits dispositifs réflecteurs (RF), ne sont pas visibles à travers ledit dispositif de vision de nuit.

Bien que le ou les dispositifs réflecteurs puissent être quelconques, il est particulièrement avantageux qu'ils soient du type connu appelé trièdre rétroréflecteur. Ainsi, le rendement de rétroréflexion est particulièrement élevé. De plus, chaque dispositif est petit, léger et maniable, de sorte que le marquage d'une zone est particulièrement aisé et ne nécessite aucune infrastructure.

Les dispositifs réflecteurs peuvent présenter une surface rétroréfléchissante dont le diamètre est compris entre 10 mm et 80 mm, et de préférence entre 15 mm et 63 mm.

Par ailleurs, le champ dudit projecteur peut être de l'ordre de quelques degrés dans deux directions rectangulaires, par exemple de l'ordre de 8° x 20°.

Le faisceau de lumière monochromatique infrarouge peut présenter une longueur d'onde comprise entre 0,8 et au moins 1 *µ*m et une puissance de l'ordre de quelques watts ou fractions de watt. Par exemple, ce projecteur comporte une diode laser susceptible d'émettre une puissance comprise entre 0,1 W et 10 W à 830 nm. On remarquera qu'il peut être avantageux d'utiliser des diodes laser émettant entre 0,9 et 1,1 *µ*m dans l'infrarouge. En effet, les dispositifs de vision de nuit les plus récents sont sensibles jusqu'à 1 *µ*m, alors que les dispositifs de vision de nuit courants ne détectent pas la gamme 0,9-1 *µ*m. Par suite, le dispositif selon l'invention reste discret pour des tiers seulement équipés d'un tel dispositif de vision de nuit courant.

Il est avantageux que, pour une distance de 10 km entre l'avion et ledit dispositif réflecteur, la puissance délivrée par ledit projecteur soit de 0,24 W, de 1,4 W ou de 3,8 W pour des dispositifs réflecteurs dont le diamètre de la surface rétroréfléchissante est respectivement de 60 mm, 25 mm ou 15 mm.

Les figures du dessin annexé feront bien comprendre comment l'invention peut être réalisée. Sur ces figures, des références identiques désignent des éléments semblables.

La figure 1 illustre schématiquement le procédé conforme à la présente invention.

La figure 2 représente l'image vue à travers le dispositif de vision de nuit.

La figure 3 montre schématiquement un exemple de réalisation du projecteur laser.

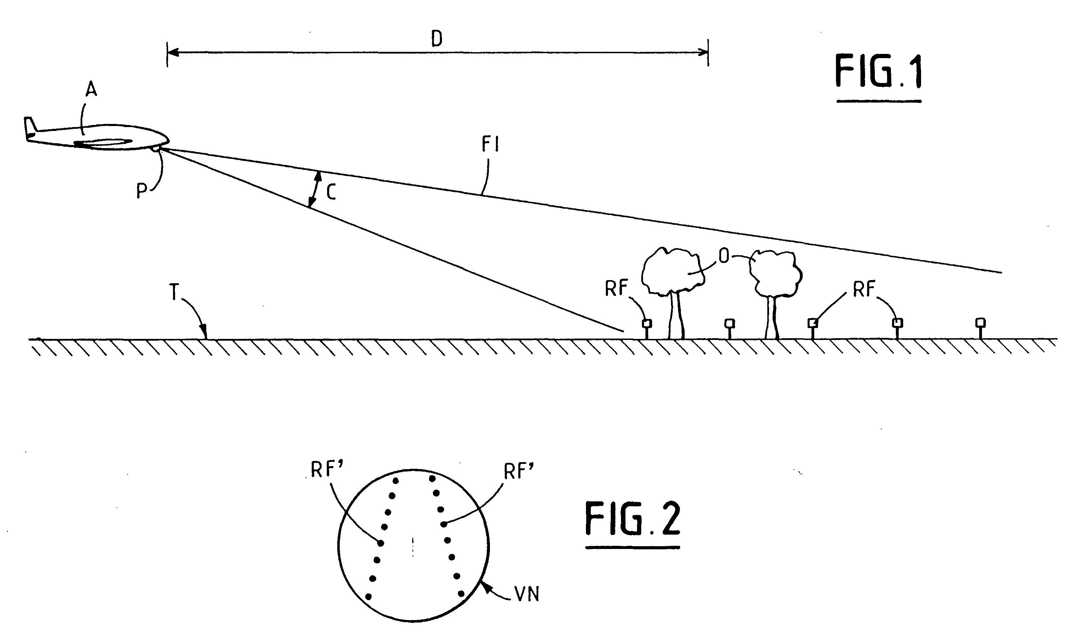

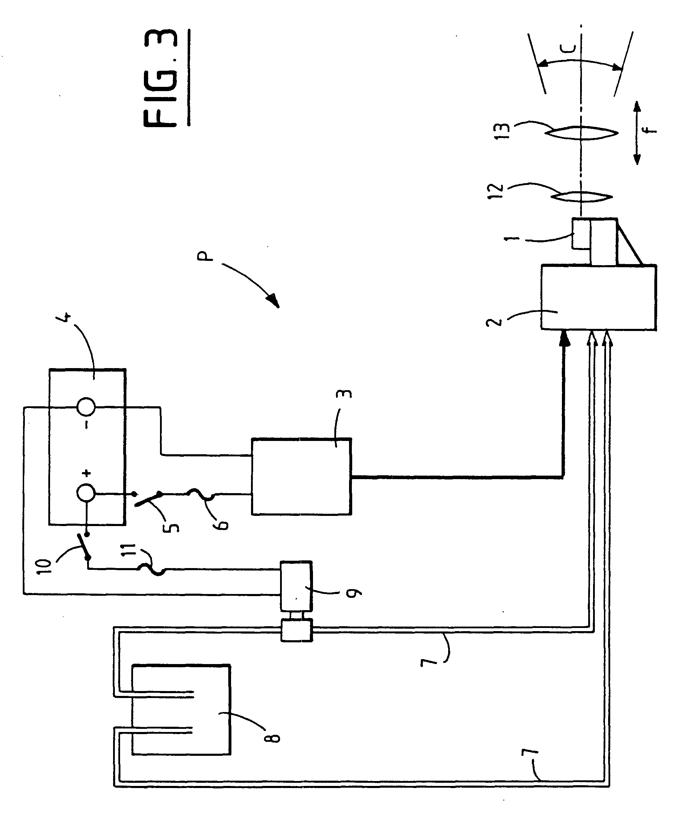

Sur la figure 1, on a représenté un avion A survolant de nuit un terrain T, sur lequel ont été disposés une pluralité de rétroréflecteurs RF. On a supposé (voir la figure 2) que ces rétroréflecteurs RF étaient agencés en deux lignes parallèles pour baliser une piste d'atterrissage pour avion. Cependant, on comprendra aisément que lesdits rétroréflecteurs RF pourraient être agencés de manière différente, par exemple pour former une ligne fermée délimitant une zone particulière du terrain T, ou bien encore que l'on pourrait n'utiliser qu'un seul rétroréflecteur pour indiquer le centre d'une zone ou un point particulier de celle-ci.

Le ou les rétroréflecteurs RF sont de tout type connu, tel que trièdre rétroréflecteur ou tout autre élément susceptible de produire un retour de lumière privilégié dans la direction de l'éclairage. Dans le cas de trièdres rétroréflecteurs, ils sont par exemple creux, réalisés en verre et obturés par une lame de verre collée. Le diamètre de leur surface réflectrice est de quelques dizaines de millimètres, par exemple compris entre 15 mm et 63 mm, en fonction de la portée D désirée. Les rétroréflecteurs RF sont dirigés dans la direction d'arrivée de l'avion A.

Sur l'avion A est prévu, à poste fixe, un projecteur laser P à grand champ C, par exemple de 8° x 20°, émettant un faisceau de lumière infrarouge FI dont la longueur d'onde est de l'ordre de 0,8 à 1,1 *µ*m, avec une puissance de quelques watts ou fractions de watt. Par exemple, le projecteur laser P a une puissance comprise entre 0,1 W et 10 W, à la longueur d'onde de 830 nm.

Le faisceau laser FI émis par le projecteur P est dirigé vers l'avant de l'avion A.

Le projecteur laser est tel que :
- son champ C est suffisamment large pour éclairer de façon continue et simultanée l'ensemble, ou tout au moins la plus grande partie, des rétroréflecteurs RF ; et
- sa puissance est suffisante pour éclairer les rétroréflecteurs RF, mais insuffisante pour éclairer les autres objets O, se trouvant dans le champ C (sur la figure 1, ces autres objets ont été représentés sous la forme d'arbres se trouvant en bordure de la piste d'atterrissage délimitée par les rétroréflecteurs RF).

Ainsi, lorsqu'un observateur embarqué à bord de l'avion A et équipé d'un dispositif de vision de nuit (non représenté, mais de tout type connu, par exemple à intensificateur de lumière) observe la zone de terrain portant les rétroréflecteurs RF éclairés par le projecteur P, il voit, dans le champ VN de ce dispositif de vision de nuit, des points lumineux, dont chacun d'eux est l'image RF' d'un rétroréflecteur RF, à l'exclusion desdits autres objets O (voir la figure 2).

Ainsi, cet observateur, qui pour des raisons évidentes d'obscurité ne peut voir les rétroréflecteurs RF et les objets O à l'oeil nu, voit, dans le dispositif de vision de nuit, l'image de la piste ou de la zone délimitée par les rétroréflecteurs RF.

On remarquera que les rétroréflecteurs RF sont invisibles du sol et ne sont visibles, en altitude, que pour ledit observateur.

La figure 3 illustre un exemple de réalisation du projecteur P. Cet exemple de réalisation comporte une diode laser continue 1 associée à un radiateur thermique 2 et alimentée électriquement par une alimentation 3, elle-même alimentée en énergie par une batterie 4, par l'intermédiaire d'un interrupteur 5 et d'un fusible 6. Le radiateur 2 est refroidi par un liquide de refroidissement (mélange éthylène-glycol) circulant dans un circuit 7, comportant un réservoir 8, sous l'action d'une pompe 9. La pompe 9 est alimentée en énergie par la batterie 4, par l'intermédiaire d'un interrupteur 10 et d'un fusible 11.

La diode laser continue 1 est susceptible d'émettre une puissance comprise entre 0,1 W et 10 W à 830 nm. La divergence de cette diode est 13° x 53°. Cette divergence est réduite à 8° x 20°, au moyen d'un système optique 12, 13 associé à la diode laser 1 et définissant le champ C du projecteur P. De préférence, au moins une lentille 13 du système optique 12, 13 est mobile (flèches f) pour permettre de changer à volonté la divergence, c'est-à-dire l'ouverture du champ C.

L'alimentation 3 de la diode laser 1 engendre un courant constant sous faible tension (par exemple 2 V maximum).

Ce courant est ajustable, pour permettre de régler la puissance émise par la diode 1.

De préférence, l'alimentation 3, la batterie 4, le réservoir 8 et la pompe 9 sont disposés à l'intérieur de l'avion A, tandis que la diode laser 1 et le radiateur 2 sont extérieurs audit avion. On évite ainsi les diffusions laser sur les vitres de l'avion, diffusions qui risqueraient d'éblouir l'observateur lorsqu'il utilise le dispositif de vision de nuit.

Le projecteur P, montré par la figure 3, n'est qu'un exemple de réalisation qui peut présenter des variantes. Par exemple, la diode laser peut être associée à une fibre optique, de sorte que la totalité du projecteur peut être intérieure à l'avion A, seule l'extrémité libre de ladite fibre apparaissant à l'extérieur dudit avion. De plus, si le large champ C couvert par la diode 1 est suffisamment limité, la puissance de celle-ci peut être faible (inférieure à 1W), de sorte qu'il est alors possible de supprimer le circuit de refroidissement 7, le réservoir 8 et la pompe 9. Le refroidissement est dans ce cas assuré par le seul radiateur thermique 2.

On remarquera que la puissance que doit émettre la diode laser 1 dépend de la distance D à laquelle les rétroréflecteurs RF doivent être détectés par l'observateur à bord de l'avion A, ainsi que du diamètre desdits rétroréflecteurs. Si la distance de visibilité est d'au moins 10 km et si les rétroréflecteurs RF sont à une distance D de l'avion A de l'ordre de 10 km, il est nécessaire que la diode 1 délivre une puissance de 0,24 W, de 1,4 W ou de 3,8 W, si le diamètre des rétroréflecteurs est respectivement égal à 60 mm, à 25 mm ou à 15 mm.

Bien entendu, comme mentionné ci-dessus, l'application du procédé et du dispositif conformes à la présente invention décrits en regard des figures n'est pas limitative de l'invention, qui peut trouver de nombreuses autres applications.

## Revendications

1. Procédé permettant à un observateur embarqué à bord d'un aéronef (A) d'identifier un élément particulier de terrain dans l'obscurité, procédé selon lequel :
- on marque ledit élément particulier de terrain à l'aide de plusieurs dispositifs réflecteurs (RF), susceptibles de réfléchir, dans la direction d'incidence, un faisceau (FI) de lumière monochromatique infrarouge incident, lesdits dispositifs réflecteurs (RF) étant dirigés dans la direction dudit observateur ; et
- on dispose, sur ledit aéronef, un projecteur (P) susceptible d'émettre ledit faisceau de lumière monochromatique infrarouge (FI),
**caractérisé :**
- en ce que ledit observateur est équipé d'un dispositif de vision de nuit et observe ledit élément particulier de terrain à travers ledit dispositif de vision de nuit ;
- en ce que ledit projecteur (P) est monté fixe sur ledit aéronef (A) ; et
- en ce que ledit projecteur (P) produit un niveau d'éclairement tel que :
. lesdits dispositifs réflecteurs (RF) sont visibles à travers ledit dispositif de vision de nuit pointé sur le champ d'éclairement dudit projecteur (P) ; et
. les objets situés dans ledit champ d'éclairement, autres que lesdits dispositifs réflecteurs (RF), ne sont pas visibles à travers ledit dispositif de vision de nuit.

2. Dispositif permettant à un observateur embarqué à bord d'un aéronef (A) d'identifier un élément particulier de terrain dans l'obscurité, ledit dispositif comportant :
- plusieurs dispositifs réflecteurs (RF) susceptibles de réfléchir, dans la direction d'incidence, un faisceau (FI) de lumière monochromatique infrarouge incident, lesdits dispositifs réflecteurs (RF) étant destinés à marquer ledit élément particulier de terrain et à être dirigés dans la direction dudit observateur ; et
- un projecteur (P), disposé sur ledit aéronef (A) et susceptible d'émettre ledit faisceau de lumière monochromatique infrarouge (FI),
- **caractérisé en ce qu'**il comporte de plus un dispositif de vision de nuit à travers lequel ledit observateur observe ledit élément particulier de terrain, **en ce que** ledit projecteur (P) est fixe, et **en ce que** ledit projecteur (P) produit un niveau d'éclairement tel que :
. lesdits dispositifs réflecteurs (RF) sont visibles à travers ledit dispositif de vision de nuit pointé sur le champ d'éclairement dudit projecteur (P) ; et
. les objets situés dans le champ d'éclairement, autres que lesdits dispositifs réflecteurs (RF), ne sont pas visibles à travers ledit dispositif de vision de nuit.

3. Dispositif selon la revendication 2,
**caractérisé en ce que** les dispositifs réflecteurs (RF) sont du type connu appelé trièdre rétroréflecteur.

4. Dispositif selon l'une des revendications 2 ou 3,
**caractérisé en ce que** les dispositifs réflecteurs présentent une surface rétroréfléchissante dont le diamètre est compris entre 10 mm et 80 mm.

5. Dispositif selon la revendication 4,
**caractérisé en ce que** ladite surface rétroréfléchissante a un diamètre compris entre 15 mm et 63 mm.

6. Dispositif selon l'une quelconque des revendications 2 à 5,
**caractérisé en ce que** le champ (C) dudit projecteur est de l'ordre de 8° x 20°.

7. Dispositif selon l'une quelconque des revendications 2 à 6,
**caractérisé en ce que** ledit faisceau de lumière monochromatique infrarouge présente une longueur d'onde comprise entre 0,8 et au moins 1 *µ*m.

8. Dispositif selon l'une quelconque des revendications 2 à 7,
**caractérisé en ce que** la puissance dudit projecteur (P) est de l'ordre de quelques watts ou fractions de watt.

9. Dispositif selon les revendications 7 et 8,
**caractérisé en ce que** ledit projecteur (P) comporte une diode laser (1) susceptible d'émettre une puissance comprise entre 0,1 W et 10 W à 830 nm.

10. Dispositif selon les revendications 5 et 9,
**caractérisé en ce que**, lorsque la distance (D) séparant ledit aéronef (A) des dispositifs réflecteurs (RF) est de l'ordre de 10 km, la puissance délivrée par ledit projecteur (P) est de 0,24 W, de 1,4 W ou de 3,8 W pour des dispositifs réflecteurs (RF) dont le diamètre de la surface rétroréfléchissante est respectivement de 60 mm, 25 mm ou 15 mm.

## Claims

1. Method enabling an observer on board an aircraft (A) to identify a particular element of terrain in darkness, method according to which:
- the said particular element of terrain is marked with the aid of several reflector devices (RF), capable of reflecting, in the direction of incidence, a beam (FI) of incident infrared monochromatic light, the said reflector devices (RF) being directed in the direction of the said observer; and
- a spotlight (P) capable of emitting the said beam of infrared monochromatic light (FI) is disposed on the said aircraft,
**characterized:**
- **in that** the said observer is equipped with a night vision device and observes the said particular element of terrain through the said night vision device;
- **in that** the said spotlight (P) is mounted fixedly on the said aircraft (A); and
- **in that** the said spotlight (P) produces a level of illumination such that:
• the said reflector devices (RF) are visible through the said night vision device pointed at the field of illumination of the said spotlight (P); and
• the objects situated in the said field of illumination, other than the said reflector devices (RF), are not visible through the said night vision device.

2. Device enabling an observer on board an aircraft (A) to identify a particular element of terrain in darkness, the said device comprising:
- several reflector devices (RF) capable of reflecting, in the direction of incidence, a beam (FI) of incident infrared monochromatic light, the said reflector devices (RF) being intended to mark the said particular element of terrain and to be directed in the direction of the said observer; and
- a spotlight (P), disposed on the said aircraft (A) and capable of emitting the said infrared monochromatic light beam (FI),
- **characterized in that** it furthermore comprises a night vision device through which the said observer observes the said particular element of terrain, **in that** the said spotlight (P) is fixed, and **in that** the said spotlight (P) produces a level of illumination such that:
• the said reflector devices (RF) are visible through the said night vision device pointed at the field of illumination of the said spotlight (P); and
• the objects situated in the field of illumination, other than the said reflector devices (RF), are not visible through the said night vision device.

3. Device according to Claim 2,
**characterized in that** the reflector devices (RF) are of the known type referred to as rectroreflector trihedron.

4. Device according to either of Claims 2 and 3,
**characterized in that** the said reflector devices exhibit a retroreflecting surface whose diameter is between 10 mm and 80 mm.

5. Device according to claim 4,
**characterized in that** the said retroreflecting surface has a diameter of between 15 mm and 63 mm.

6. Device according to any one of Claims 2 to 5,
**characterized in that** the field (C) of the said spotlight is of the order of 8° x 20°.

7. Device according to any one of Claims 2 to 6,
**characterized in that** the said infrared monochromatic light beam exhibits a wavelength of between 0.8 and at least 1 µm.

8. Device according to any one of Claims 2 to 7,
**characterized in that** the power of the said spotlight (P) is of the order of a few watts or fractions of a watt.

9. Device according to Claims 7 and 8,
**characterized in that** the said spotlight (P) comprises a laser diode (1) capable of emitting a power of between 0.1 W and 10 W at 830 nm.

10. Device according to Claims 5 and 9,
**characterized in that**, when the distance (D) separating the said aircraft (A) from the reflector devices (RF) is of the order of 10 km, the power delivered by the said spotlight (P) is 0.24 W, 1.4 W or 3.8 W for reflector devices (RF) whose retroreflecting surface has a diameter of 60 mm, 25 mm or 15 mm respectively.

## Patentansprüche

1. Verfahren, das einem Beobachter an Bord eines Flugzeugs (A) gestattet, ein besonderes Element eines Geländes im Dunkeln zu identifizieren, gemäß welchem:
- das besondere Element des Geländes mit Hilfe von mehreren reflektierenden Einrichtungen (RF) markiert wird, die fähig sind, ein einfallendes, infrarotes, monochromatisches Lichtbündel (FI) in der Einfallrichtung zu reflektieren, wobei die reflektierenden Einrichtungen (RF) in die Richtung des Beobachters gerichtet sind; und
- am Flugzeug ein Scheinwerfer (P) angeordnet wird, der fähig ist das infrarote, monochromatische Lichtbündel (FI) auszusenden,
**dadurch gekennzeichnet**,
- **dass** der Beobachter mit einem Nachtsichtgerät ausgestattet ist und das besondere Element des Geländes durch das Nachtsichtgerät beobachtet;
- **dass** der Scheinwerfer (P) am Flugzeug (A) fest angebracht ist; und
- **dass** der Scheinwerfer (P) ein so hohes Beleuchtungsniveau erzeugt, dass
. die reflektierenden Einrichtungen (RF) durch das auf das Beleuchtungsfeld des Scheinwerfers (P) gerichtete Nachtsichtgerät sichtbar sind; und
. die anderen im Beleuchtungsfeld befindlichen Gegenstände als die reflektierenden Einrichtungen (RF) durch das Nachtsichtgerät nicht sichtbar sind.

2. Vorrichtung, die einem Beobachter an Bord eines Flugzeugs (A) gestattet ein besonderes Element eines Geländes im Dunkeln zu identifizieren, welche aufweist:
- mehrere reflektierende Einrichtungen (RF), die fähig sind, ein einfallendes, infrarotes, monochromatisches Lichtbündel (FI) in der Einfallrichtung zu reflektieren, wobei die reflektierenden Einrichtungen (RF) dafür vorgesehen sind, das besondere Element des Geländes zu markieren und in die Richtung des Beobachters gerichtet zu sein; und
- einen Scheinwerfer (P), der am Flugzeug (A) angeordnet und fähig ist, das infrarote, monochromatische Lichtbündel (FI) auszusenden,
- **dadurch gekennzeichnet, dass** sie außerdem ein Nachtsichtgerät aufweist, durch welches der Beobachter das besondere Element des Geländes beobachtet, dass der Scheinwerfer (P) fest ist und dass der Scheinwerfer (P) ein so hohes Beleuchtungsniveau erzeugt, dass:
. die reflektierenden Einrichtungen (RF) durch das auf das Beleuchtungsfeld des Scheinwerfers (P) gerichtete Nachtsichtgerät sichtbar sind; und
. die anderen im Beleuchtungsfeld befindlichen Gegenstände als die reflektierenden Einrichtungen (RF) durch das Nachtsichtgerät nicht sichtbar sind.

3. Vorrichtung nach Anspruch 2, **dadurch gekennzeichnet, dass** die reflektierenden Einrichtungen (RF) von dem bekannten Typ sind, der retroreflektierender Trieder genannt wird.

4. Vorrichtung nach einem der Ansprüche 2 oder 3, **dadurch gekennzeichnet, dass** die reflektierenden Einrichtungen eine retroreflektierende Oberfläche aufweisen, deren Durchmesser zwischen 10 mm und 80 mm beträgt.

5. Vorrichtung nach Anspruch 4, **dadurch gekennzeichnet, dass** die retroreflektierende Oberfläche einen Durchmesser zwischen 15 mm und 63 mm hat.

6. Vorrichtung nach einem der Ansprüche 2 bis 5, **dadurch gekennzeichnet, dass** das Feld (C) des Scheinwerfers in der Größenordnung von 8° x 20° liegt.

7. Vorrichtung nach einem der Ansprüche 2 bis 6, **dadurch gekennzeichnet, dass** das infrarote, monochromatische Lichtbündel eine Wellenlänge zwischen 0,8 und wenigstens 1 *µ*m aufweist.

8. Vorrichtung nach einem der Ansprüche 2 bis 7, **dadurch gekennzeichnet, dass** die Leistung des Scheinwerfers (P) in der Größenordnung von einigen Watt oder Bruchteilen eines Watt liegt.

9. Vorrichtung nach den Ansprüchen 7 und 8, **dadurch gekennzeichnet, dass** der Scheinwerfer (P) eine Laserdiode (1) aufweist, die fähig ist, bei 830 nm eine Leistung zwischen 0,1 W und 10 W abzustrahlen.

10. Vorrichtung nach den Ansprüchen 5 und 9, **dadurch gekennzeichnet, dass** wenn die Entfernung (D), die das Flugzeug (A) von den reflektierenden Einrichtungen (RF) trennt, in der Größenordnung von 10 km liegt, für reflektierende Einrichtungen (RF), deren Durchmesser der retroreflektierenden Oberfläche 60 mm, 25 mm bzw. 15 mm beträgt, die vom Scheinwerfer (P) gelieferte Leistung 0,24 W, 1,4 W oder 3,8 W beträgt.
